# EUROPEAN PATENT APPLICATION

(11) **EP 4 734 509 A1**
(43) Date of publication of application: **29.04.2026**
(21) Application number: 23942502.8
(22) Date of filing: 21.06.2023
(51) Int. Cl.: H04N 19/119, H04N 19/136, H04N 19/176, H04N 19/70

(54) **IMAGE ENCODING/DECODING METHOD AND APPARATUS, AND RECORDING MEDIUM STORING BITSTREAMS**

(71) Applicant: LG Electronics Inc., Yeongdeungpo-gu Seoul 07336 (KR)
(72) Inventor: AHN, Yongjo, Seoul 06772 (KR); LIM, Jaehyun, Seoul 06772 (KR); PARK, Naeri, Seoul 06772 (KR); NAM, Junghak, Seoul 06772 (KR); JANG, Hyeongmoon, Seoul 06772 (KR)
(74) Representative: Jung, Minkyu
(86) International application number: PCT/KR2023/008618
(87) International publication number: WO 2024/262671

(57) **Abstract**

An image decoding/encoding method and apparatus according to the present disclosure are capable of segmenting a current block on the basis of a predetermined segmentation type, and decoding/encoding a plurality of coding blocks generated by segmenting the current block. The predetermined segmentation type includes at least one of quad segmentation, binary segmentation, or ternary segmentation, and the quad segmentation can be divided into square quad segmentation that segments a square block into four and non-square quad segmentation that segments a non-square block into four.

## Description

### [Technical Field]

The present disclosure relates to an image encoding/decoding method and apparatus, and a recording medium storing a bitstream.

### [Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

### [Disclosure]

### [Technical Problem]

The present disclosure is to provide an adaptive block split method and apparatus based on various split types.

The present disclosure is to provide a method and an apparatus for signaling split information for non-square quad split.

The present disclosure is to provide a method and an apparatus for determining a split depth to derive whether a block is split and/or a context model of split information.

The present disclosure is to provide a method and an apparatus for restricting an application of a split type so that duplicated split shapes do not occur in a tree structure-based block splitting using various split types.

### [Technical Solution]

An image decoding method and apparatus according to the present disclosure may split a current block based on a predetermined split type and may decode a plurality of coding blocks generated by splitting the current block.

In the image decoding method and apparatus according to the present disclosure, the predetermined split type may include at least one of quad split, binary split, or ternary split, and the quad split may be classified into square quad split that splits a square block into four and non-square quad split that splits a non-square block into four.

In the image decoding method and apparatus according to the present disclosure, whether the non-square quad split is allowed may be determined based on an encoding parameter of the current block, and the encoding parameter of the current block may include at least one of a size of the current block, a shape of the current block, or a position of the current block in a current picture.

In the image decoding method and apparatus according to the present disclosure, whether the non-square quad split is allowed may be determined based on whether a size of the current block is greater than or equal to a predetermined threshold size.

In the image decoding method and apparatus according to the present disclosure, whether the non-square quad split is allowed may be determined based on at least one of whether a width and a height of the current block are different from each other or whether a ratio of the width and the height of the current block is 1:M or M:1, and M may be an integer of 2, 3, 4, or more.

In the image decoding method and apparatus according to the present disclosure, the non-square quad split may be adaptively performed based on a first quad flag for indicating whether the square quad split is applied.

In the image decoding method and apparatus according to the present disclosure, the first quad flag may be signaled based on at least one of a first variable indicating whether the square quad split is allowed or a second variable indicating whether the non-square quad split is allowed.

In the image decoding method and apparatus according to the present disclosure, when the current block is a block generated by the binary split or the ternary split, the first variable may be set to false, while the second variable may be set to true.

In the image decoding method and apparatus according to the present disclosure, when the current block is a block generated by the binary split or the ternary split, based on the width and the height of the current block being identical to each other, the first variable may be set to false, and based on the width and the height of the current block being different from each other, the first variable may be set to true.

In the image decoding method and apparatus according to the present disclosure, a context model for entropy decoding of the first quad flag may be derived based on a split depth of a neighboring block adjacent to the current block, and the split depth of the neighboring block may include at least one of a split depth according to the square quad split or a split depth according to the non-square quad split.

In the image decoding method and apparatus according to the present disclosure, the non-square quad split may be adaptively performed based on a second quad flag for indicating whether the non-square quad split is applied.

In the image decoding method and apparatus according to the present disclosure, the second quad flag may be signaled when the current block corresponds to a leaf node of a tree structure.

In the image decoding method and apparatus according to the present disclosure, when the current block is split into two coding blocks by horizontal binary split, and vertical binary split is applied to an upper coding block among the two coding blocks, vertical binary split may be restricted from being applied to a lower coding block among the two coding blocks.

In the image decoding method and apparatus according to the present disclosure, when the current block is split into two coding blocks by vertical binary split, and horizontal binary split is applied to a left coding block among the two coding blocks, horizontal binary split may be allowed to a right coding block among the two coding blocks.

An image encoding method and apparatus according to the present disclosure may split a current block based on a predetermined split type and may encode a plurality of coding blocks generated by splitting the current block. Here, the predetermined split type may include at least one of quad split, binary split, or ternary split, and the quad split may be classified into square quad split that splits a square block into four, and non-square quad split that splits a non-square block into four.

A computer-readable digital storage medium storing encoded video/image information that causes a decoding apparatus according to the present disclosure to perform an image decoding method is provided.

A computer-readable digital storage medium storing video/image information generated according to an image encoding method according to the present disclosure is provided.

A method and an apparatus for transmitting video/image information generated according to an image encoding method according to the present disclosure are provided.

### [Technical Effects]

According to the present disclosure, a coding block with an adaptive size and shape may be generated by block splitting of a tree structure-based on various split types.

According to the present disclosure, non-square quad split may be adaptively performed by using split information for square quad split without signaling additional split information for non-square quad split.

According to the present disclosure, by signaling additional split information for non-square quad split, non-square quad split may be adaptively performed.

According to the present disclosure, by signaling split information for non-square quad split in consideration of whether a current block corresponds to a leaf node of a tree structure, encoding efficiency of split information may be improved.

According to the present disclosure, by defining split depth according to various split types, it may be used to derive whether a block is split and/or a context model of split information.

According to the present disclosure, when a pre-defined condition is satisfied, by restricting application of vertical or horizontal binary split, duplicated split shapes may be controlled not to occur.

### [Brief Description of Drawings]

FIG. 1 shows a video/image coding system according to the present disclosure.
FIG. 2 shows a schematic block diagram of an encoding apparatus to which an embodiment of the present disclosure is applicable and encoding of video/image signals is performed.
FIG. 3 shows a schematic block diagram of a decoding apparatus to which an embodiment of the present disclosure is applicable and decoding of video/image signals is performed.
FIG. 4 illustrates a decoding method performed by a decoding apparatus 300, as an embodiment according to the present disclosure.
FIG. 5 and FIG. 6 illustrate a block split method based on a predetermined split type, as an embodiment according to the present disclosure.
FIG. 7 illustrates an example in which binary split according to the present disclosure is restricted.
FIG. 8 illustrates an example in which binary split according to the present disclosure is restricted.
FIG. 9 illustrates a tree structure-based block split method, as an embodiment according to the present disclosure.
FIG. 10 to FIG. 12 illustrate a method of calculating split depth according to a split type according to the present disclosure.
FIG. 13 illustrates a schematic configuration of a decoding apparatus 300 performing a decoding method according to the present disclosure.
FIG. 14 illustrates an encoding method performed by an encoding apparatus 200, as an embodiment according to the present disclosure.
FIG. 15 illustrates a schematic configuration of an encoding apparatus 200 performing an encoding method according to the present disclosure.
FIG. 16 shows an example of a contents streaming system to which embodiments of the present disclosure may be applied.

### [Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

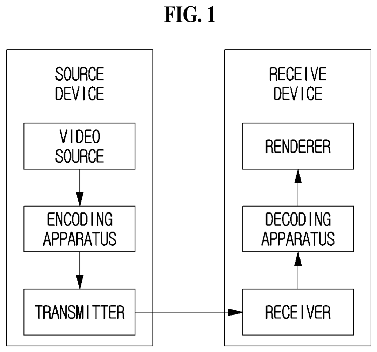

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

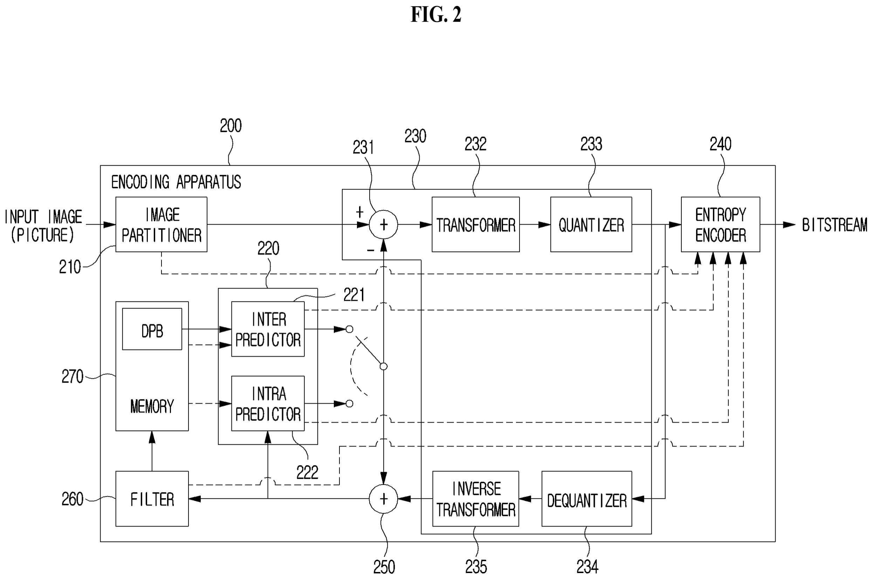

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictor 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

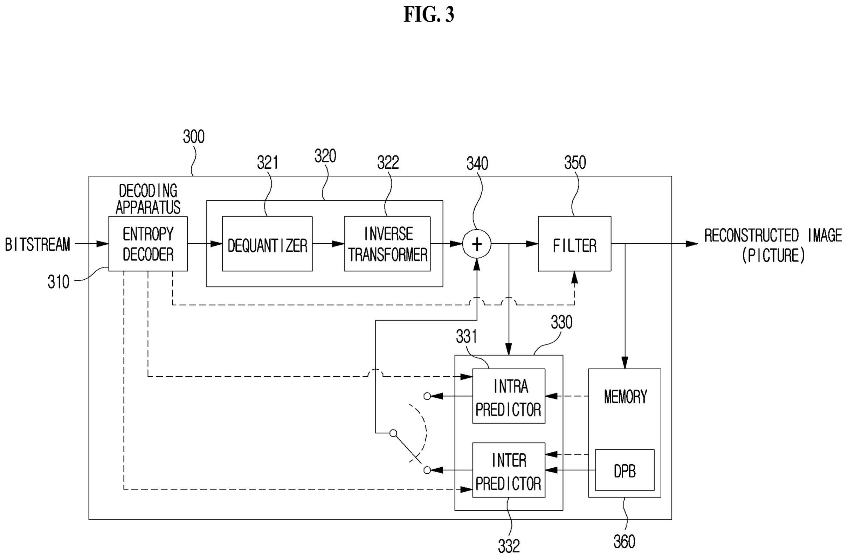

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

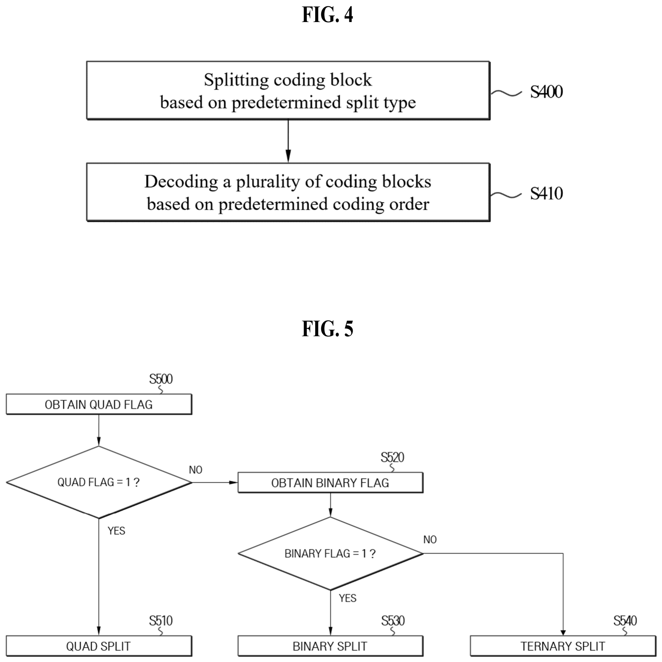

FIG. 4 illustrates a decoding method performed by a decoding apparatus 300, as an embodiment according to the present disclosure.

Referring to FIG. 4, a coding block may be split based on a predetermined split type S400.

Here, a coding block may mean a coding tree block. Alternatively, it may mean a coding block generated by block split based on a predetermined split type. The split type according to the present disclosure may include at least one of a quad split, a binary split, or a ternary split. As an example, the coding block may be one of four coding blocks generated by the quad split. Alternatively, the coding block may be one of a plurality of coding blocks generated by either the binary split or the ternary split.

In addition, a coding tree block according to the present disclosure may be defined as a square block. However, the present disclosure is not limited thereto, and the coding tree block may also be defined as a non-square block. In addition, a coding block generated by a block split based on a predetermined split type may be a square block or a non-square block. As an example, according to a shape of a coding block to be split (hereinafter, referred to as a current block), coding blocks generated by a quad split may be square blocks or non-square blocks. According to the shape of the current block, a number or a range of split types allowed/applied to the current block may vary. Hereinafter, a split type according to the present disclosure will be described in detail.

### 1. Quad split

A quad split may mean a split type that splits a current block into four coding blocks. As an example, the quad split may split the current block into four coding blocks by one horizontal line and one vertical line crossing the center of the block. Here, the four coding blocks may be the same size. The quad split may be applied to a square block or may be applied to a non-square block. The quad split according to the present disclosure may be classified into a square quad split that splits a square block into four, and a non-square quad split that splits a non-square block into four.

The non-square quad split may be a quad split applied when a width and a height of a current block are different from each other. Widths and heights of four coding blocks generated by the non-square quad split may be different from each other. It may be applied when a ratio of the width and the height of the current block is 1:N or N:1. Here, N may be an integer of 2, 3, 4, 5, 6, or more.

As an example, when a ratio of the width and the height of the current block is 1:2 or 2:1, the current block may be split into four non-square coding blocks based on the quad split. In this case, when the width and the height of the current block are respectively defined as cuWidth and cuHeight, the width and the height of the four non-square coding blocks generated by the quad split may be cuWidth/2 and cuHeight/2.

Similarly, when a ratio of a width and a height of a current block is 1:4 or 4:1, the current block may be split into four non-square coding blocks based on the quad split. In this case, when the width and the height of the current block are respectively defined as cuWidth and cuHeight, the width and the height of the four non-square coding blocks generated by the quad split may be cuWidth/2 and cuHeight/2. However, the non-square quad split is not limited to being applied to a non-square block with a ratio of a width and a height being 1:2, 2:1, 1:4, or 4:1, and may be extended to be applied to a non-square block with a ratio of a width and a height being 1:3, 3:1, 1:5, 5:1, 1:6, or 6:1.

Whether the non-square quad split is allowed and/or applied, may be determined based on an encoding parameter of a current block. The encoding parameter of the current block may include at least one of a size, a shape, a position, a tree type, or a component type. Here, the size of the current block may be represented by at least one of a width, a height, a maximum value/minimum value of the width and the height, a product of the width and the height, a sum of the width and the height, or a ratio of the width and the height. The shape of the current block may mean whether the width and the height of the current block are identical. The position of the current block may mean whether the current block is located at a picture boundary.

As an example, the non-square quad split may be allowed or applied when a size of the current block is greater than or equal to a predetermined threshold size (condition 1). Conversely, when the size of the current block is less than the predetermined threshold size, the non-square quad split may not be allowed for the current block. The predetermined threshold size may mean a minimum block size in which the non-square quad split is allowed. Information on the minimum block size in which the non-square quad split is allowed may be signaled in at least one of higher-level syntax such as a sequence parameter set (SPS), a picture parameter set (PPS), or a slice header (SH). Alternatively, the minimum block size in which the non-square quad split is allowed may be a pre-defined value identical in an encoding apparatus and a decoding apparatus, and may be an integer of 8, 16, 32, 64, or more.

As an example, when a width and a height of a current block are different from each other, the non-square quad split may be allowed or applied (condition 2). Conversely, when the width and the height of the current block are identical to each other, the non-square quad split may not be allowed.

As an example, even when a width and a height of a current block are different from each other, the non-square quad split may be allowed or applied when a ratio of the width and the height of the current block is 1:M or M:1 (condition 3). Conversely, when the ratio of the width and the height of the current block does not correspond to 1:M or M:1, the non-square quad split may not be allowed for the current block. Specifically, the non-square quad split may be allowed or applied when the ratio of the width and the height of the current block is 1:2 or 2:1. Additionally, the non-square quad split may be allowed or applied when the ratio of the width and the height of the current block is 1:4 or 4:1. Additionally, in splitting a coding block, an asymmetric binary split to be described later may be allowed, and in this case, the non-square quad split may also be allowed or applied to the current block with a ratio of the width and the height of 1:3 or 3:1.

As an example, when a current block is located within a picture, the non-square quad split may be allowed or applied (condition 4). Conversely, when the current block is located at a picture boundary, the non-square quad split may not be allowed or applied for the current block. In other words, when a right boundary of the current block exceeds a right boundary of the picture and/or a bottom boundary of the current block exceeds a bottom boundary of the picture, the non-square quad split may not be allowed for the current block. Alternatively, when the current block is located within the picture, or when boundary of the current block exceeds both the right and bottom boundaries of the picture, the non-square quad split may be allowed or applied. Conversely, when the boundary of the current block exceeds only one of the right boundary or the bottom boundary of the picture, the non-square quad split may not be allowed. Alternatively, when the current block is located within the picture or when the boundary of the current block exceeds only one of the right boundary or the bottom boundary of the picture, the non-square quad split may be allowed or applied. Conversely, when the boundary of the current block exceeds both the right and bottom boundaries of the picture, the non-square quad split may not be allowed. However, the present disclosure is not limited thereto, and even when the right boundary of the current block exceeds the right boundary of the picture and/or the bottom boundary of the current block exceeds the bottom boundary of the picture, the non-square quad split may be allowed for the current block.

At least one of condition 1 to condition 4 described above may be identically defined in an encoding apparatus and a decoding apparatus. The non-square quad split may be allowed or applied when the condition pre-defined identically in the encoding apparatus and the decoding apparatus is satisfied. Alternatively, the non-square quad split may be allowed or applied when any one of conditions 1 to 4 described above is satisfied.

A quad split may be adaptively performed based on a quad flag (split_qt_flag). When a value of the split_qt_flag is equal to 1, a current block may be split into four coding blocks, and when the value of the split_qt_flag is equal to 0, the current block may not be split into four coding blocks.

The quad flag may be used to indicate whether the square quad split is applied. In addition, without signaling or deriving an additional flag for indicating whether the non-square quad split is applied, the quad flag may be used to indicate whether the non-square quad split is applied. As an example, when the current block is square, the quad flag may indicate whether the square current block is split into four square coding blocks. When the current block is non-square, the quad flag may indicate whether the non-square current block is split into four non-square coding blocks. Alternatively, apart from the quad flag, an additional flag for indicating whether the non-square quad split is applied may be defined to be signaled or derived. Hereinafter, a method of signaling or deriving information about the quad split will be described in detail.

### Method 1

The quad flag may be signaled only when at least one of a binary split or a ternary split is allowed and at least one of a square quad split or a non-square quad split is allowed.

As an example, as shown in Table 1 below, when at least one of allowSplitBtVer, allowSplitBtHor, allowSplitTtVer, or allowSplitTtHor is true and at least one of allowSplitQT or allowSplitNQT is true, the quad flag may be signaled through a bitstream. The allowSplitBtVer and allowSplitBtHor are variables indicating whether binary split is allowed, and the allowSplitTtVer and allowSplitTtHor are variables indicating whether ternary split is allowed. In addition, the allowSplitQT is a variable indicating whether a square quad split is allowed, and the allowSplitNQT is a variable indicating whether a non-square quad split is allowed.

**[Table 1]**

| | |
|---|---|
| coding_tree( x0, y0, cbWidth, cbHeight, qgOnY, qgOnC, cbSubdiv, cqtDepth, mttDepth, depthOffset, partIdx, treeTypeCurr, modeTypeCurr ) { | **Descriptor** |
| ... | |
| if( ( allowSplitBtVer ∥ allowSplitBtHor \| \| allowSplitTtVer \| \| allowSplitTtHor ) && (allowSplitQT \| \| allowSplitNQT ) ) | |
| **split_qt_flag** | ae(v) |

In Table 1, allowSplitQT may be set to false when any one of conditions in Table 2 is satisfied, and may be set to true otherwise.

**[Table 2]**

| |
|---|
| - When a tree type is a single tree (SINGLE_TREE) or dual tree luma (DUAL_TREE_LUMA) and a size of a current block is less than or equal to a minimum luma block size (MinQtSizeY) in which a square quad split is allowed |
| - When a tree type is dual tree chroma (DUAL _TREE_CHROMA) and a size of a current block is less than or equal to a minimum chroma block size (MinQtSizeC * SubHeightC / SubWidthC) in which a square quad split is allowed |
| - When the current block is generated by at least one binary split or ternary split (mttDepth is not equal to 0) |
| - When a tree type is dual tree chroma (DUAL _TREE_CHROMA) and a width of a current block (cbSize / SubWidthC) is less than or equal to 4 |
| - When a tree type is dual tree chroma (DUAL _TREE_CHROMA) and a mode type is an intra mode (MODE TYPE INTRA) |

According to Table 2, when the current block is generated by at least one binary split or ternary split, allowSplitNQT is set to false.

In Table 1, allowSplitNQT may be set to false when any one of conditions in Table 3 is satisfied, and may be set to true otherwise.

**[Table 3]**

| |
|---|
| - When a tree type is single tree (SINGLE_TREE) or dual tree luma (DUAL_TREE_LUMA), and a size of a current block is less than or equal to a minimum luma block size (MinNQtSizeY) in which a non-square quad split is allowed |
| - When a tree type is dual tree chroma (DUAL_TREE_CHROMA) and a size of a current block is less than or equal to a minimum chroma block size (MinNQtSizeC * SubHeightC / SubWidthC) in which a non-square quad split is allowed |
| - When a tree type is dual tree chroma (DUAL_TREE_CHROMA) and a width of a current block (cbSize / SubWidthC) is less than or equal to 4 |
| - When a tree type is dual tree chroma (DUAL_TREE_CHROMA) and a mode type is an intra mode (MODE_TYPE_INTRA) |

According to Table 3, even when a current block is generated by at least one binary split or ternary split, allowSplitNQT may be set to true. In this case, when at least one of allowSplitBtVer, allowSplitBtHor, allowSplitTtVer, or allowSplitTtHor is true, the quad flag may be signaled through a bitstream.

Alternatively, allowSplitNQT may be set to true when a pre-defined condition including at least one of conditions 1 to 4 described above are satisfied, and may be set to false otherwise. Alternatively, allowSplitNQT may be set to true when, in addition to conditions according to Table 3, the pre-defined conditions described above are further satisfied, and may be set to false otherwise.

On the other hand, when allowSplitBtVer, allowSplitBtHor, allowSplitTtVer, allowSplitTtHor, allowSplitQT, and allowSplitNQT are all false, the quad flag may not be signaled through a bitstream. However, a value of the quad flag may be derived based on a split flag indicating whether a current block is split into a plurality of coding blocks. As an example, when the split flag for the current block indicates that the current block is split into a plurality of coding blocks (split_cu_flag = 1), the value of the quad flag may be derived as 1.

Alternatively, when allowSplitBtVer, allowSplitBtHor, allowSplitTtVer, and allowSplitTtHor are all false, but at least one of allowSplitQT or allowSplitNQT is true, the value of the quad flag may be derived as 1. In this case, regardless of whether a value of the split flag for the current block is 1, the value of the quad flag may be derived as 1. Alternatively, it may be restricted so that the value of the quad flag is derived as 1 only when the value of the split flag for the current block is 1.

Alternatively, when at least one of allowSplitBtVer, allowSplitBtHor, allowSplitTtVer, or allowSplitTtHor is true, but both allowSplitQT and allowSplitNQT are false, the value of the quad flag may be derived as 0.

Table 1 is merely an example of signaling the quad flag and is not limited thereto. As an example, regardless of whether at least one of allowSplitBtVer, allowSplitBtHor, allowSplitTtVer, or allowSplitTtHor is true, the quad flag may be signaled when at least one of allowSplitQT or allowSplitNQT is true.

Meanwhile, the quad flag may be signaled through a bitstream only when a value of the split flag is 1. The split flag may be signaled through a bitstream when at least one of a square quad split, a non-square quad split, a binary split, or a ternary split is allowed. As an example, as shown in Table 4, when at least one of allowSplitBtVer, allowSplitBtHor, allowSplitTtVer, allowSplitTtHor, allowSplitQT, or allowSplitNQT is true, the split flag (split_cu_flag) may be signaled through a bitstream. In other words, even when allowSplitBtVer, allowSplitBtHor, allowSplitTtVer, allowSplitTtHor, and allowSplitQT are all false, when allowSplitNQT is true, the split flag may be signaled through a bitstream.

**[Table 4]**

| | |
|---|---|
| coding_tree( x0, y0, cbWidth, cbHeight, qgOnY, qgOnC, cbSubdiv, cqtDepth, mttDepth, depthO ffset, partIdx, treeTypeCurr, modeTypeCurr ) { | **Descriptor** |
| if( ( allowSplitBtVer ∥ allowSplitBtHor \| \| allowSplitTtVer \| \| allowSplitTtHor \| \| | |
| allowSplitQT \| \| allowSplitNQT ) && ( x0 + cbWidth <= pic_width_in_luma_samples ) && ( y0 + cbHeight <= pic_height_in_luma_samples ) ) | |
| **split_cu_flag** | e(v) |

The allowSplitQT and allowSplitNQT in Table 4 may be derived as described with reference to Table 2 and Table 3, and redundant description thereof will be omitted here.

A quad flag for a current block may be entropy decoded based on a predetermined context model. Here, the context model may be derived based on a split depth of a neighboring block adjacent to the current block. The neighboring block may be a block encoded prior to the current block and may include at least one of an upper neighboring block, a left neighboring block, an upper-left neighboring block, a lower-left block, or an upper-right block.

The split depth of the neighboring block may mean a split depth according to a quad split. As an example, the split depth of the neighboring block may mean a split depth according to a non-square quad split excluding a split depth according to a square quad split. Alternatively, the split depth of the neighboring block may mean a split depth according to a square quad split excluding a split depth according to a non-square quad split. Alternatively, the split depth of the neighboring block may mean a sum of a split depth according to a square quad split and a split depth according to a non-square quad split.

Alternatively, depending on whether allowSplitQT and allowSplitNQT are true, the split depth of a neighboring block for deriving a context model of the quad flag may be defined differently. As an example, when both allowSplitQT and allowSplitNQT are true, the split depth of the neighboring block for deriving the context model of the quad flag may be defined as a sum of a split depth according to a square quad split and a split depth according to a non-square quad split. When allowSplitQT is true and allowSplitNQT is false, the split depth of the neighboring block for deriving the context model of the quad flag may be defined as a split depth according to a square quad split. When allowSplitQT is false and allowSplitNQT is true, the split depth of the neighboring block for deriving the context model of the quad flag may be defined as a split depth according to a non-square quad split.

Alternatively, a context model of the quad flag for a non-square quad split may also be derived based on a split depth according to the non-square quad split of a current block. As an example, a context model of the quad flag for the non-square quad split may be derived by comparing the split depth according to the non-square quad split of the current block with a pre-defined threshold. In this case, the threshold may be a pre-defined value identical in an encoding apparatus and a decoding apparatus, and may be an integer of 1, 2, 3, or more.

Alternatively, the context model of the quad flag may be derived based on both a split depth of a neighboring block described above and a split depth according to a non-square quad split of a current block.

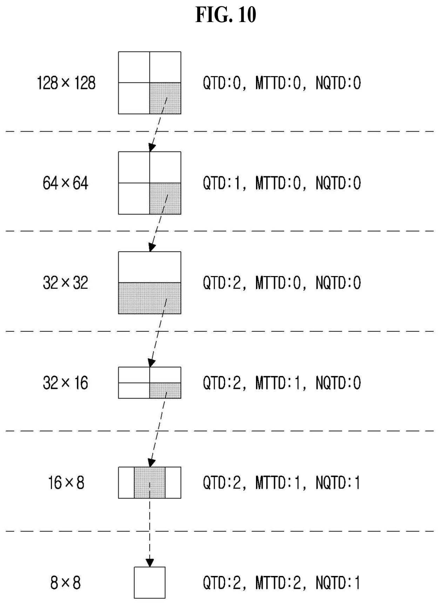

As described above, the split depth according to a quad split may be defined as a value obtained by summing a split depth according to a square quad split and a split depth according to a non-square quad split, and the split depth according to a square quad split may also be defined independently from the split depth according to a non-square quad split. A method of calculating such split depth will be described in detail with reference to FIG. 10 to FIG. 12.

### Method 2

The quad flag may also be signaled only when at least one of a binary split or a ternary split is allowed and a quad split is allowed.

As an example, as shown in Table 5 below, when at least one of allowSplitBtVer, allowSplitBtHor, allowSplitTtVer, or allowSplitTtHor is true and allowSplitQT is true, the quad flag may be signaled through a bitstream. The allowSplitBtVer and allowSplitBtHor are variables indicating whether a binary split is allowed, the allowSplitTtVer and allowSplitTtHor are variables indicating whether a ternary split is allowed, and the allowSplitQT is a variable indicating whether a square or a non-square quad split is allowed.

**[Table 5]**

| | |
|---|---|
| coding_tree( x0, y0, cbWidth, cbHeight, qgOnY, qgOnC, cbSubdiv, cqtDepth, mttDepth, depthOffset, partIdx, treeTypeCurr, modeTypeCurr ) { | **Descriptor** |
| ... | |
| if( ( allowSplitBtVer \| \| allowSplitBtHor \| \| allowSplitTtVer \| \| allowSplitTtHor ) && ( allowSplitQT ) | |
| **split_qt_flag** | ae(v) |

A method of deriving allowSplitQT in Table 5 will be described.

First, when a width and a height of a current block are identical, allowSplitQT is set to false when any one of conditions in Table 6 is satisfied, and otherwise, allowSplitQT may be set to true.

**[Table 6]**

| |
|---|
| - When a tree type is single tree (SINGLE_TREE) or dual tree luma (DUAL_TREE_LUMA) and a size of a current block is less than or equal to a minimum luma block size (MinQtSizeY) in which a quad split is allowed |
| - When a tree type is dual tree chroma (DUAL _TREE_CHROMA) and a size of a current block is less than or equal to a minimum chroma block size (MinQtSizeC * SubHeightC / SubWidthC) in which a quad split is allowed |
| - When the current block is generated by at least one binary split or ternary split (mttDepth is not equal to 0) |
| - When a tree type is dual tree chroma (DUAL _TREE_CHROMA) and a width of a current block (cbSize / SubWidthC) is less than or equal to 4 |
| - When a tree type is dual tree chroma (DUAL _TREE_CHROMA) and a mode type is intra mode (MODE_TYPE_INTRA) |

According to Table 6, even when a width and a height of a current block are identical, when the current block is generated by at least one binary split or ternary split, allowSplitQT is set to false, and furthermore, the quad flag is not signaled through a bitstream.

On the other hand, when a width and a height of a current block are different from each other, allowSplitQT is set to false when any one of conditions in Table 7 is satisfied, and otherwise, allowSplitQT may be set to true.

**[Table 7]**

| |
|---|
| - When a tree type is single tree (SINGLE_TREE) or dual tree luma (DUAL _TREE_LUMA) and a width or a height of a current block is less than or equal to a minimum luma block size (MinQtSizeY) in which a quad split is allowed |
| - When a tree type is dual tree chroma (DUAL _TREE_CHROMA) and a width or a height of a current block is less than or equal to a minimum chroma block size (MinQtSizeC * SubHeightC / SubWidthC) in which a quad split is allowed |
| - When a tree type is dual tree chroma (DUAL _TREE_CHROMA) and a width of a current block (cbSize / SubWidthC) is less than or equal to 4 |
| - When a tree type is dual tree chroma (DUAL _TREE_CHROMA) and a mode type is intra mode (MODE_TYPE_INTRA) |

According to Table 7, when a width and a height of a current block are different from each other, allowSplitQT may be set to true even when the current block is generated by at least one binary split or ternary split. In this case, when at least one of allowSplitBtVer, allowSplitBtHor, allowSplitTtVer, or allowSplitTtHor is true, the quad flag may be signaled through a bitstream.

Alternatively, allowSplitQT may be set to true when a pre-defined condition including at least one of conditions 1 to 4 described above are satisfied, and may be set to false otherwise. Alternatively, allowSplitQT may be set to true when, in addition to conditions according to Table 7, the pre-defined conditions described above are further satisfied, and may be set to false otherwise.

On the other hand, when allowSplitBtVer, allowSplitBtHor, allowSplitTtVer, allowSplitTtHor, and allowSplitQT are all false, the quad flag may not be signaled through a bitstream. However, a value of the quad flag may be derived based on a split flag indicating whether a current block is split into a plurality of coding blocks. As an example, when the split flag for the current block indicates that the current block is split into a plurality of coding blocks (split_cu_flag = 1), the value of the quad flag may be derived as 1.

Alternatively, when allowSplitBtVer, allowSplitBtHor, allowSplitTtVer, and allowSplitTtHor are all false, but allowSplitQT is true, the value of the quad flag may be derived as 1. In this case, regardless of whether a value of the split flag for the current block is 1, the value of the quad flag may be derived as 1. Alternatively, it may be restricted so that the value of the quad flag is derived as 1 only when the value of the split flag for the current block is 1.

Alternatively, when at least one of allowSplitBtVer, allowSplitBtHor, allowSplitTtVer, or allowSplitTtHor is true, but allowSplitQT is false, the value of the quad flag may be derived as 0.

Table 5 is merely an example of signaling the quad flag and is not limited thereto. As an example, regardless of whether at least one of allowSplitBtVer, allowSplitBtHor, allowSplitTtVer, or allowSplitTtHor is true, the quad flag may also be signaled when allowSplitQT is true.

Meanwhile, the quad flag may be signaled through a bitstream only when a value of the split flag is 1. The split flag may be signaled through a bitstream when at least one of a quad split, a binary split, or a ternary split is allowed. As an example, as shown in Table 8, when at least one of allowSplitBtVer, allowSplitBtHor, allowSplitTtVer, allowSplitTtHor, or allowSplitQT is true, the split flag (split_cu_flag) may be signaled through a bitstream.

**[Table 8]**

| | |
|---|---|
| coding_tree( x0, y0, cbWidth, cbHeight, qgOnY, qgOnC, cbSubdiv, cqtDepth, mttDepth, depthOffset, partIdx, treeTypeCurr, modeTypeCurr ) { | **Descriptor** |
| if( ( allowSplitBtVer \| \| allowSplitBtHor \| \| allowSplitTtVer \| \| allowSplitTtHor \| \| | |
| allowSplitQT ) && ( x0 + cbWidth <= pic_width_in_luma_samples ) && ( y0 + cbHeight <= pic_height_in_luma_samples ) ) | |
| **split_cu_flag** | ae(v) |

The allowSplitQT in Table 8 may be derived as described with reference to Table 6 and Table 7, and redundant description thereof will be omitted here.

A quad flag for a current block may be entropy decoded based on a predetermined context model. Here, the context model may be derived based on a split depth of a neighboring block adjacent to the current block. The neighboring block may be a block encoded prior to the current block and may include at least one of an upper neighboring block, a left neighboring block, an upper-left neighboring block, a lower-left block, or an upper-right block.

The split depth of the neighboring block may mean a split depth according to a quad split. As an example, the split depth of the neighboring block may mean a value obtained by summing a split depth according to a square quad split and a split depth according to a non-square quad split. However, the present disclosure is not limited thereto, and the split depth of the neighboring block may mean only a split depth according to a square quad split or only a split depth according to a non-square quad split.

Alternatively, a context model of the quad flag for a non-square quad split may be derived based on a split depth according to the non-square quad split of a current block. As an example, a context model of the quad flag for the non-square quad split may be derived by comparing the split depth according to the non-square quad split of the current block with a pre-defined threshold. In this case, the threshold may be a pre-defined value identical in an encoding apparatus and a decoding apparatus, and may be an integer of 1, 2, 3, or more.

Alternatively, the context model of the quad flag may be derived based on both a split depth of a neighboring block described above and a split depth according to the non-square quad split of a current block.

As described above, the split depth according to a quad split may be defined as a value obtained by summing a split depth according to a square quad split and a split depth according to a non-square quad split, and the split depth according to a square quad split may also be defined independently of the split depth according to a non-square quad split. A method of calculating such split depth will be described in detail with reference to FIG. 10 to FIG. 12.

### Method 3

The quad flag (split_qt_flag) described above may be restricted to a flag for indicating a quad split of a square coding block, and a flag (split_ngt_flag) for a quad split of a non-square coding block may additionally be defined. Hereinafter, split_qt_flag will be referred to as a first quad flag, and split_nqt_flag will be referred to as a second quad flag. In other words, the second quad flag may indicate whether a non-square coding block is split into four non-square coding blocks.

The second quad flag is signaled when allowSplitNQT is true, and may not be signaled when allowSplitNQT is false. Here, allowSplitNQT is set to false when any one of the conditions in Table 3 described above is satisfied, and may be set to true otherwise. Alternatively, allowSplitNQT may be set to true when a pre-defined condition including at least one of conditions 1 to 4 described above are satisfied, and may be set to false otherwise. Alternatively, allowSplitNQT may be set to true when, in addition to the conditions according to Table 3, the pre-defined conditions described above are further satisfied, and may be set to false otherwise.

Even when allowSplitNQT is true, the second quad flag is signaled when a width and a height of a current block are different from each other, and may not be signaled when the width and the height of the current block are identical.

The second quad flag may also be signaled when a current block corresponds to a leaf node of a tree structure. Whether the current block corresponds to a leaf node of the tree structure may be determined based on a split flag indicating whether the current block is split into a plurality of coding blocks. As an example, when a value of the split flag is 1, the current block may be determined not to correspond to the leaf node of the tree structure, and when the value of the split flag is 0, the current block may be determined to correspond to the leaf node of the tree structure.

A second quad flag for a current block may be entropy decoded based on a predetermined context model. Here, the context model may be derived based on a split depth of a neighboring block adjacent to the current block. The neighboring block may be a block encoded prior to the current block and may include at least one of an upper neighboring block, a left neighboring block, an upper-left neighboring block, a lower-left block, or an upper-right block. The neighboring block here may be the same as the neighboring block for deriving the context model of the first quad flag. Alternatively, a position of a neighboring block for deriving the context model of the second quad flag may be defined differently from a position of a neighboring block for deriving the context model of the first quad flag.

The split depth of the neighboring block may mean a split depth according to a quad split. As an example, the split depth of the neighboring block may mean a split depth according to a non-square quad split excluding a split depth according to a square quad split. Alternatively, the split depth of the neighboring block may mean a split depth according to a square quad split excluding a split depth according to a non-square quad split. Alternatively, the split depth of the neighboring block may mean a value obtained by summing a split depth according to a square quad split and a split depth according to a non-square quad split.

Alternatively, a context model of the second quad flag for a current block may be derived based on a split depth according to the non-square quad split of the current block. As an example, a context model of the quad flag for the non-square quad split may be derived by comparing the split depth according to the non-square quad split of the current block with a pre-defined threshold. In this case, the threshold may be a pre-defined value identical in an encoding apparatus and a decoding apparatus, and may be an integer of 1, 2, 3, or more.

Alternatively, the context model of the second quad flag may be derived based on both a split depth of a neighboring block described above and a split depth of a current block according to the non-square quad split.

As described above, the split depth according to a quad split may be defined as a value obtained by summing a split depth according to a square quad split and a split depth according to a non-square quad split, and the split depth according to a square quad split may also be defined independently of the split depth according to a non-square quad split. A method of calculating such split depth will be described in detail with reference to FIG. 10 to FIG. 12.

Whether the quad flag for a current block is signaled may be determined based on whether the current block overlaps with a picture boundary and/or at least one of positions of the picture boundary overlapped by the current block (for example, a right boundary, a bottom boundary). As an example, when a right boundary of the current block exceeds a right boundary of the picture and simultaneously a bottom boundary of the current block exceeds a bottom boundary of the picture, the non-square quad split may be implicitly applied to the current block. In other words, when the right boundary of the current block exceeds the right boundary of the picture and simultaneously the bottom boundary of the current block exceeds the bottom boundary of the picture, the non-square quad split may be applied to the current block without signaling the quad flag for the current block. In this case, the value of the quad flag for the current block may be derived as 1, and the non-square quad split may be forced for the current block. Meanwhile, when the right boundary of the current block exceeds the right boundary of the picture or the bottom boundary of the current block exceeds the bottom boundary of the picture, the non-square quad split may be determined to be allowed for the current block, and the non-square quad split may be adaptively applied based on the quad flag signaled for the current block.

### 2. Binary split and Ternary split

A binary split may mean a split type in which a current block is split into two coding blocks. The binary split may split the current block into two coding blocks by a single horizontal or vertical line. As an example, the binary split may be classified into a symmetric binary split in which a single horizontal or vertical line traverses a center of a block, and an asymmetric binary split in which a single horizontal or vertical line does not traverse the center of the block.

In the case of the symmetric binary split, the current block may be split into two coding blocks with the same size, and in the case of the asymmetric binary split, the current block may be split into two coding blocks with different sizes. The binary split may be applied to a square block, and may also be applied to a non-square block. The asymmetric binary split may be applied to the square block and may not be applied to the non-square block. Alternatively, the asymmetric binary split may be applied to the non-square block and may not be applied to the square block. Alternatively, the asymmetric binary split may be applied regardless of a block shape.

A ternary split may mean a split type in which a current block is split into three coding blocks. As an example, the ternary split may split the current block into three coding blocks by three horizontal or vertical lines that do not traverse a center of a block. Here, a ratio of a width or a height of the three coding blocks may be 1:2:1. The ternary split may be applied to a square block, and may also be applied to a non-square block.

The binary split and the ternary split may be adaptively performed based on a binary flag (split_binary_flag). Here, the binary flag may indicate whether a coding block is split into two coding blocks. As an example, when a value of the binary flag is 1, the coding block is split into two coding blocks based on the binary split, and when a value of the binary flag is 0, the coding block may be split into three coding blocks based on the ternary split.

A split direction flag indicating a split direction of the binary split or the ternary split may further be used. According to the split direction flag, the current block may be split into two coding blocks based on a horizontal binary split or a vertical binary split. Similarly, according to the split direction flag, the current block may be split into three coding blocks based on a horizontal ternary split or a vertical ternary split. The split direction flag may be signaled before the binary flag is signaled, or may be signaled after the binary flag is signaled.

Additionally, index information for specifying a position of a split line for the asymmetric binary split may further be used. The index information may specify any one of pre-defined candidate positions identical in an encoding apparatus and a decoding apparatus. The index information may be obtained when it is determined that the binary split is applied to the current block. In this case, the pre-defined candidate positions may include a position of a split line for the symmetric binary split. Alternatively, even when it is determined that the binary split is applied to the current block, the index information may be obtained only when it is determined that the asymmetric binary split is applied to the current block. In this case, the pre-defined candidate positions may exclude a position of a split line for the symmetric binary split and may include positions of split lines for the asymmetric binary split.

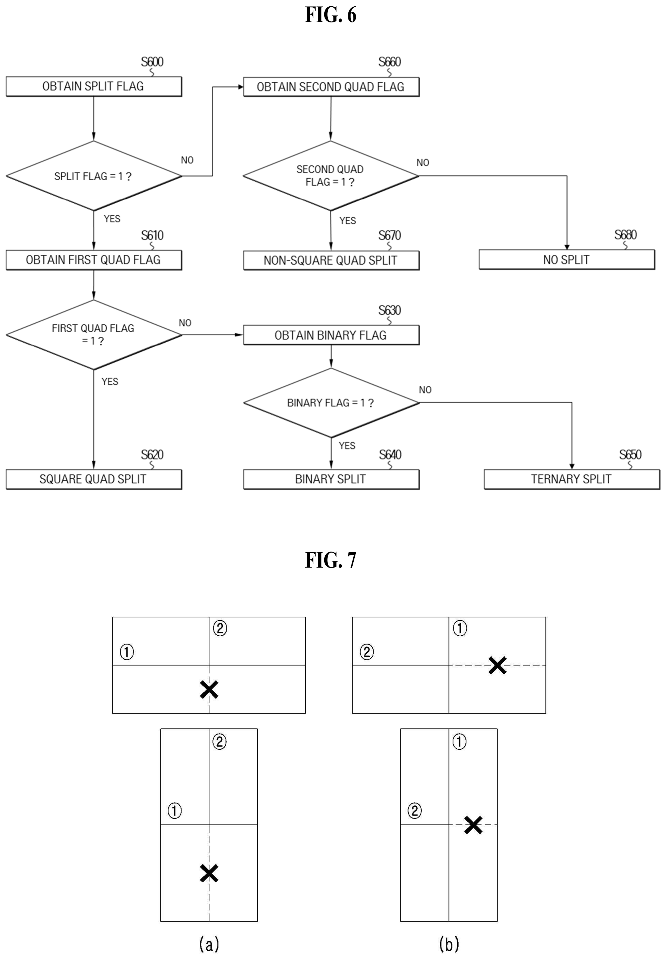

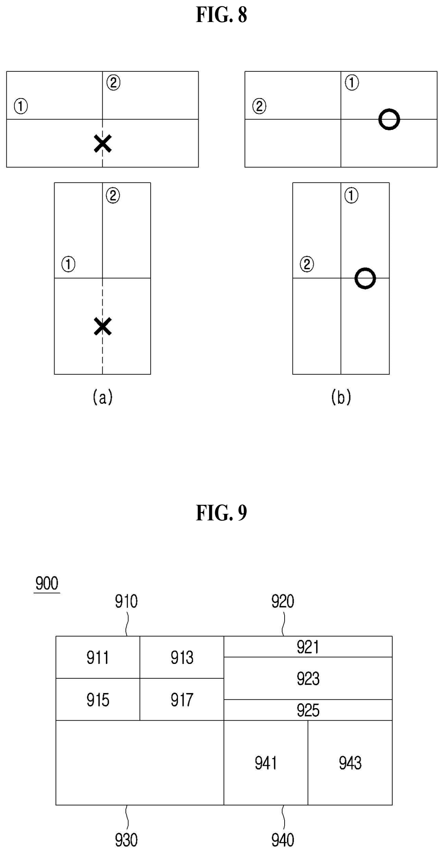

Meanwhile, when a binary split according to the present disclosure is applied multiple times to a single coding block, a case may occur in which the coding block is split into the same shape as a non-square quad split. To prevent block split of the same shape from occurring, the binary split may be restricted from being allowed when a pre-defined condition is satisfied, which will be described with reference to FIG. 7 and FIG. 8.

The split type described above may be used for a tree structure-based block split, which will be described with reference to FIG. 9.

Alternatively, when a current block is split into four coding blocks by a non-square quad split, the four coding blocks may be restricted so that no further block split based on the split type described above is performed. In this case, the four coding blocks split from the current block may be forced to correspond to a leaf node of a tree structure, and signaling of additional syntax for the block split may be omitted, thereby improving encoding efficiency.

Alternatively, some of the split types described above may be used for a tree structure-based block split, and the others may not be used for a tree structure-based block split. As an example, a square quad split, a binary split, and a ternary split may be used for a tree structure-based block split, and a non-square quad split may not be used for a tree structure-based block split. The non-square quad split may be used only when a tree structure-based block split is no longer performed.

Referring to FIG. 4, a plurality of coding blocks generated by splitting a coding block may be sequentially decoded according to a predetermined coding order S410.

FIG. 5 and FIG. 6 illustrate a block split method based on a predetermined split type, as an embodiment according to the present disclosure.

FIG. 5 relates to a method of performing a non-square quad split using syntax for a square quad split without additional signaling of syntax for the non-square quad split.

Referring to FIG. 5, a quad flag for a current block may be obtained S500.

Based on whether the non-square quad split is allowed, a quad flag for a current block may be signaled through a bitstream or may be derived. This is as described with reference to FIG. 4, and redundant description thereof will be omitted here.

When a value of the quad flag is 1, the current block may be split into four non-square coding blocks based on the non-square quad split S510.

On the other hand, when a value of the quad flag is 0, a binary flag for the current block may be obtained S520.

When a value of the binary flag is 1, the current block may be split into two coding blocks based on the binary split S530. On the other hand, when a value of the binary flag is 0, the current block may be split into three coding blocks based on the ternary split S540.

FIG. 6 relates to a method of performing a non-square quad split by additionally signaling syntax for the non-square quad split.

According to the present disclosure, the non-square quad split for a current block may be performed only when the current block corresponds to a leaf node in a tree structure-based block split. Accordingly, when the current block corresponds to a leaf node of the tree structure, information related to the non-square quad split of the current block may be signaled.

Referring to FIG. 6, a split flag for the current block may be obtained S600.

The split flag may indicate whether a current block is split into a plurality of coding blocks. Alternatively, the split flag may also indicate whether the current block corresponds to a leaf node in a tree structure-based block split. As an example, a split flag with a value of 1 may indicate that the current block does not correspond to a leaf node in a tree structure-based block split, and a split flag with a value of 0 may indicate that the current block corresponds to a leaf node in a tree structure-based block split.

When a value of the split flag is 1, a first quad flag for the current block may be obtained S610. Here, the first quad flag may indicate whether a square quad split is applied.

When a value of the first quad flag is 1, the current block may be split into four square coding blocks based on the square quad split S620.

On the other hand, when a value of the first quad flag is 0, a binary flag for the current block may be obtained S630.

When a value of the binary flag is 1, the current block may be split into two coding blocks based on the binary split S640. On the other hand, when a value of the binary flag is 0, the current block may be split into three coding blocks based on the ternary split S650.

When a value of the split flag is 0, a second quad flag for the current block may be obtained S660. Here, the second quad flag may indicate whether a non-square quad split is applied to the current block of a leaf node.

When a value of the second quad flag is 1, the current block may be split into four non-square coding blocks based on the non-square quad split S670. In this case, the four non-square coding blocks generated by the non-square quad split may be restricted from being further split based on the split type described above.

On the other hand, when a value of the second quad flag is 0, the current block may not be split into a plurality of coding blocks S680.

FIG. 7 illustrates an example in which the binary split according to the present disclosure is restricted.

When the binary split according to the present disclosure is applied multiple times to one coding block, there may occur a case in which the coding block is split into the same shape as a non-square quad split. To prevent block split of the same shape from occurring, the binary split may be restricted from being allowed when corresponding to a pre-defined condition.

Referring to FIG. 7(a), when a horizontal binary split is applied to a coding block to generate two coding blocks and a vertical binary split is applied to each of the two coding blocks, a block split with the same shape as a non-square quad split may occur.

In this way, when one coding block is split into two coding blocks by a horizontal binary split (condition 1) and a vertical binary split is applied to an upper coding block among the two coding blocks (condition 2), a vertical binary split may be restricted from being applied to a lower coding block. As an example, when the above described conditions are satisfied, a variable allowSplitBtVer for the lower coding block may be set to false, and split information for the lower coding block may not be signaled. Here, the split information may include at least one of a binary flag or a split direction flag. The split information may be derived based on a variable allowSplitBtHor for the lower coding block, or may be derived as a pre-defined value identical in an encoding apparatus and a decoding apparatus.

Referring to FIG. 7(b), when a vertical binary split is applied to a coding block to generate two coding blocks and a horizontal binary split is applied to each of the two coding blocks, a block split with the same shape as a non-square quad split may occur.

Similarly, when one coding block is split into two coding blocks by a vertical binary split (condition 1) and a horizontal binary split is applied to a left coding block among the two coding blocks (condition 2), a horizontal binary split may be restricted from being applied to a right coding block.

As an example, when the above described conditions are satisfied, a variable allowSplitBtHor for the right coding block may be set to false, and split information for the right coding block may not be signaled. Here, the split information may include at least one of a binary flag or a split direction flag. The split information may be derived based on a variable allowSplitBtVer for the right coding block, or may be derived as a pre-defined value identical in an encoding apparatus and a decoding apparatus.

FIG. 8 illustrates an example in which the binary split according to the present disclosure is restricted.

When the binary split according to the present disclosure is applied multiple times to one coding block, there may occur a case in which four coding blocks with the same size is generated as a non-square quad split. In this case, whether the four coding blocks according to the binary split have the same coding order as four coding blocks according to the non-square quad split may be considered to restrict the binary split.

Referring to FIG. 8(a), when one coding block is split into two coding blocks by a horizontal binary split (condition 1) and a vertical binary split is applied to an upper coding block among the two coding blocks (condition 2), a vertical binary split may be restricted from being applied to a lower coding block. Under this condition, two sub coding blocks in the upper coding block are sequentially encoded/decoded from left to right direction. Afterwards, when the lower coding block is also split into two sub coding blocks by a vertical binary split, the two sub coding blocks in the lower coding block are also sequentially encoded/decoded from left to right direction. This has the same coding order as when a coding block is split into four sub coding blocks by a non-square quad split and sequentially encoded/decoded in a Z-scan order. Similarly, when four coding blocks according to multiple binary splits have the same coding order as four coding blocks according to the non-square quad split, the vertical binary split for the lower coding block may be restricted.

As an example, when the above described condition is satisfied, a variable allowSplitBtVer for the lower coding block may be set to false, and split information for the lower coding block may not be signaled. Here, the split information may include at least one of a binary flag or a split direction flag. The split information may be derived based on a variable allowSplitBtHor for the lower coding block, or may be derived as a pre-defined value identical in an encoding apparatus and a decoding apparatus.

Referring to FIG. 8(b), when one coding block is split into two coding blocks by a vertical binary split (condition 1) and a horizontal binary split is applied to a left coding block among the two coding blocks (condition 2), a horizontal binary split may be allowed to a right coding block. Under this condition, two sub coding blocks in the left coding block are sequentially encoded/decoded from top to bottom direction. Afterwards, when the right coding block is also split into two sub coding blocks by a horizontal binary split, the two sub coding blocks in the right coding block are also sequentially encoded/decoded from top to bottom direction. This has a different coding order from when a coding block is split into four sub coding blocks by a non-square quad split and sequentially encoded/decoded in a Z-scan order. Similarly, when four coding blocks according to multiple binary splits have a different coding order from four coding blocks according to the non-square quad split, the horizontal binary split for the right coding block may be allowed.

As an example, when the above condition is satisfied, a variable allowSplitBtHor for the right coding block may be set to true, and split information for the right coding block may be signaled. Here, the split information may include at least one of a binary flag or a split direction flag.

FIG. 9 illustrates a tree structure-based block split method, as an embodiment according to the present disclosure.

Referring to FIG. 9, a first non-square coding block 900 may be split into four second coding blocks 910, 920, 930, and 940 based on a non-square quad split. At least one of the four second coding blocks may be further split based on a predetermined split type.

As with the second coding block 910, any one of the second coding blocks may be further split into four sub coding blocks 911, 913, 915, and 917 based on the non-square quad split. Alternatively, as with the second coding block 920, any one of the second coding blocks may be further split into three sub coding blocks 921, 923, and 925 based on a ternary split of horizontal direction. Alternatively, as with the second coding block 930, no additional split may be applied to the second coding block. Alternatively, as with the second coding block 940, any one of the second coding blocks may be further split into two sub coding blocks 941 and 943 based on a binary split of vertical direction.

Similarly, by allowing additional block split for the four coding blocks generated by the non-square quad split, more detailed block split may be enabled, and furthermore, the encoding efficiency may be improved.

FIG. 10 to FIG. 12 illustrate a method of calculating split depth according to a split type according to the present disclosure.

FIG. 10 relates to a method of independently deriving the split depth according to the non-square quad split. As an example, the split depth according to the present disclosure may be classified into a split depth according to the square quad split (QTD), a split depth according to the binary and ternary splits (MTTD), and a split depth according to the non-square quad split (NQTD).

As shown in FIG. 10, a coding block of 128x128 may be recursively split by a tree structure-based block split, and accordingly, the split depth of coding blocks may be changed. Here, it is assumed that the QTD, MTTD, and NQTD for the coding block of 128x128 are each 0.

First, the coding block of 128x128 may be split into four sub coding blocks by the square quad split. Since the square quad split is applied to the coding block of 128x128, the QTD for each coding block of 64x64 is increased to 1, and the MTTD and NQTD remain 0.

Next, among the four sub coding blocks included in the coding block of 128x128, the coding block of 64x64, which is the lower-right sub coding block, may be split into four sub coding blocks by the square quad split. Since the square quad split is applied to the coding block of 64x64, the QTD for each coding block of 32x32 is increased to 2, and the MTTD and NQTD remain 0.

Next, among the four sub coding blocks included in the coding block of 64x64, the coding block of 32x32, which is the lower-right sub coding block, may be split into two sub coding blocks by a binary split. Since the horizontal binary split is applied to the coding block of 32x32, the MTTD for each coding block of 32x16 is increased to 1, and the QTD and NQTD remain 2 and 0, respectively.

Next, among the two sub coding blocks included in the coding block of 32x32, the coding block of 32x16, which is the lower sub coding block, may be split into four sub coding blocks by a non-square quad split. Since the non-square quad split is applied to the coding block of 32x16, the NQTD for each coding block of 16x8 is increased to 1, and the QTD and MTTD remain 2 and 1, respectively.

Next, among the four sub coding blocks included in the coding block of 32x16, the coding block of 16x8, which is the lower-right sub coding block, may be split into three sub coding blocks by a ternary split. Since the ternary split is applied to the coding block of 16x8, the MTTD for two coding blocks of 4x8 and one coding block of 8x8 is increased to 2, and the QTD and NQTD remain 2 and 1, respectively.

Finally, among the three sub coding blocks included in the coding block of 16x8, with respect to the coding block of 8x8, which is the center sub coding block, without an additional block split, it becomes a leaf node of the tree structure, and encoding/decoding is performed. Therefore, the QTD, MTTD, and NQTD for the coding block of 8x8 may be calculated as 2, 2, and 1, respectively.

As described above, in the tree structure using various split types, the split depth according to each split type may be calculated separately, and this may be used to determine whether a block is split or to derive a context model for entropy coding of block split information.

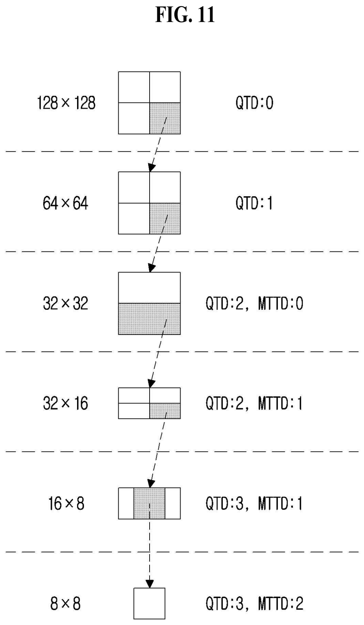

In FIG. 10, a case of separately calculating the split depth according to the square quad split, the split depth according to the binary and ternary splits, and the split depth according to the non-square quad split has been described, but the present disclosure is not limited thereto. As an example, the split depth according to the square quad split and the split depth according to the non-square quad split may be combined to be calculated as a single quad split depth. Alternatively, the non-square quad split may be included in the split of the multi-type tree, and the split depth may be combined with the split depth according to the binary and ternary splits. This will be described with reference to FIG. 11 to FIG. 12.

FIG. 11 relates to a method of calculating the split depth according to the non-square quad split by combining it with the split depth according to the square quad split. As an example, the split depth according to the present disclosure may be classified into a split depth according to the square and non-square quad splits (QTD) and a split depth according to the binary and ternary splits (MTTD).

As shown in FIG. 11, a coding block of 128x128 may be recursively split by a tree structure-based block split, and accordingly, the split depth of coding blocks may be changed. Here, it is assumed that the QTD and MTTD for the coding block of 128x128 are each 0.

First, the coding block of 128x128 may be split into four sub coding blocks by the square quad split. Since the square quad split is applied to the coding block of 128x128, the QTD for each coding block of 64x64 is increased to 1, and the MTTD remains 0.

Next, among the four sub coding blocks included in the coding block of 128x128, the coding block of 64x64, which is the lower-right sub coding block, may be split into four sub coding blocks by the square quad split. Since the square quad split is applied to the coding block of 64x64, the QTD for each coding block of 32x32 is increased to 2, and the MTTD remains 0.

Next, among the four sub coding blocks included in the coding block of 64x64, the coding block of 32x32, which is the lower-right sub coding block, may be split into two sub coding blocks by a binary split. Since the horizontal binary split is applied to the coding block of 32x32, the MTTD for each coding block of 32x16 is increased to 1, and the QTD remains 2.

Next, among the two sub coding blocks included in the coding block of 32x32, the coding block of 32x16, which is the lower sub coding block, may be split into four sub coding blocks by a non-square quad split. Since the non-square quad split is applied to the coding block of 32x16, the QTD for each coding block of 16x8 is increased to 3, and the MTTD remains 1.

Next, among the four sub coding blocks included in the coding block of 32x16, the coding block of 16x8, which is the lower-right sub coding block, may be split into three sub coding blocks by a ternary split. Since the ternary split is applied to the coding block of 16x8, the MTTD for two coding blocks of 4x8 and one coding block of 8x8 is increased to 2, and the QTD remains 3.

Finally, among the three sub coding blocks included in the coding block of 16x8, with respect to the coding block of 8x8, which is the center sub coding block, without an additional block split, it becomes a leaf node of the tree structure, and encoding/decoding is performed. Therefore, the QTD and MTTD for the coding block of 8x8 may be calculated as 3 and 2, respectively.

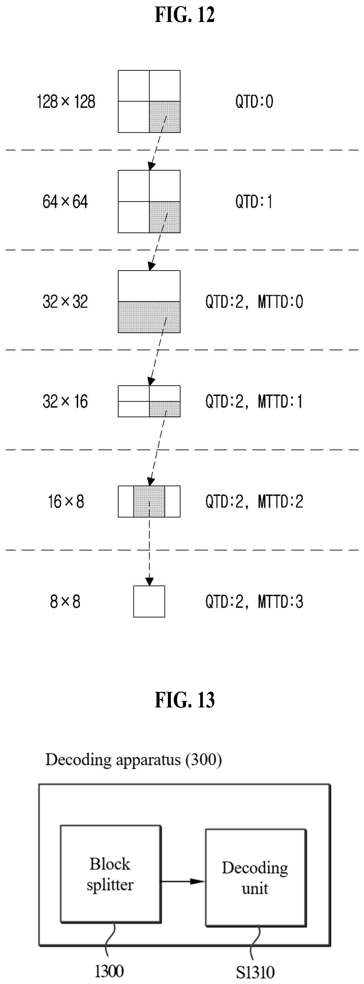

FIG. 12 relates to a method of deriving a split depth according to the non-square quad split by combining it with a split depth according to the binary and ternary splits. As an example, the split depth according to the present disclosure may be classified into a split depth according to the square quad split (QTD) and a split depth according to the binary and ternary splits (MTTD).

As shown in FIG. 12, a coding block of 128x128 may be recursively split by a tree structure-based block split, and accordingly, the split depth of coding blocks may be changed. Here, it is assumed that the QTD and MTTD for the coding block of 128x128 are each 0.

First, the coding block of 128x128 may be split into four sub coding blocks by the square quad split. Since the square quad split is applied to the coding block of 128x128, the QTD for each coding block of 64x64 is increased to 1, and the MTTD remains 0.

Next, among the four sub coding blocks included in the coding block of 128x128, the coding block of 64x64, which is the lower-right sub coding block, may be split into four sub coding blocks by the square quad split. Since the square quad split is applied to the coding block of 64x64, the QTD for each coding block of 32x32 is increased to 2, and the MTTD remains 0.

Next, among the four sub coding blocks included in the coding block of 64x64, the coding block of 32x32, which is the lower-right sub coding block, may be split into two sub coding blocks by the binary split. Since the horizontal binary split is applied to the coding block of 32x32, the MTTD for each coding block of 32x16 is increased to 1, and the QTD remains 2.

Next, among the two sub coding blocks included in the coding block of 32x32, the coding block of 32x16, which is the lower sub coding block, may be split into four sub coding blocks by the non-square quad split. Since the non-square quad split is applied to the coding block of 32x16, the MTTD for each coding block of 16x8 is increased to 2, and the QTD remains 2.

Next, among the four sub coding blocks included in the coding block of 32x16, the coding block of 16x8, which is the lower-right sub coding block, may be split into three sub coding blocks by the ternary split. Since the ternary split is applied to the coding block of 16x8, the MTTD for two coding blocks of 4x8 and one coding block of 8x8 is increased to 3, and the QTD remains 2.

Finally, among the three sub coding blocks included in the coding block of 16x8, the coding block of 8x8, which is the center sub coding block, becomes a leaf node of the tree structure without additional block split, and encoding/decoding is performed. Therefore, the QTD and MTTD for the coding block of 8x8 may be derived as 2 and 3, respectively.

As shown in FIG. 10, FIG. 11, and FIG. 12, according to an embodiment of the present disclosure, a method of calculating by using a split depth according to a non-square quad split as an independent depth or by combining it with a split depth according to the square quad split or a split depth according to the binary and ternary splits may be used. When at least one non-square quad split is performed in the process of splitting a coding tree block, the maximum value of a split depth according to the split of a multi-type tree (MTTD) may be adaptively changed. The change of the maximum value of the MTTD may be applied when the split depth according to the non-square quad split is derived by being combined with the split depth according to the binary and ternary splits. The maximum value of the MTTD may be a value pre-defined identically in an encoding apparatus and a decoding apparatus, or may be signaled in at least one of higher-level syntax such as a sequence parameter set (SPS), a picture parameter set (PPS), or a slice header (SH). However, when at least one non-square quad split is performed in the process of splitting a coding tree block, a predetermined value may be added to the maximum value of the MTTD to increase the maximum value of the MTTD.

The predetermined value may be a value pre-defined identically in an encoding apparatus and a decoding apparatus (for example, an integer of 1, 2, or more), or may be signaled in at least one of the higher-level syntax described above. The predetermined value may be added to the maximum value of the MTTD when at least one non-square quad split is performed in the process of splitting a coding tree block. The predetermined value may be determined based on the number of times that a non-square quad split is performed in the split process from the coding tree block to a current block.

The predetermined value may be added to the maximum value of the MTTD only when the non-square quad split is performed N times or more in the process of splitting a coding tree block. Here, N may be an integer of 2, 3, 4, or more.

Similarly, the maximum value of the MTTD may be increased based on whether the non-square quad split is performed and/or the number of times the non-square quad split is performed. Moreover, whether a split of a multi-type tree such as a binary split or a ternary split is allowed for a current block may be determined based on the increased maximum value of the MTTD. As an example, even when the pre-defined or signaled maximum value of the MTTD is 3, when a non-square quad split is performed for a coding tree block in which the current block is included, the maximum value of the MTTD may be increased by 1. In this case, even when the MTTD of the current block is 3, it may be determined that a split of a multi-type tree such as a binary split or a ternary split is allowed for the current block.

Even when the split depth according to the non-square quad split is calculated by being combined with other split depths, the problem of the opportunity of a binary split or a ternary split being reduced according to whether the non-square quad split is applied may be supplemented, and the split depth may be adaptively increased to improve the coding efficiency.

FIG. 13 illustrates a schematic configuration of a decoding apparatus 300 for performing a decoding method according to the present disclosure.

Referring to FIG. 13, the decoding apparatus 300 may include a block splitter 1300 and a decoding unit 1310. The block splitter 1300 may be provided in an entropy decoder 310, or may be provided in the decoding apparatus 300 as a separate module connected to the entropy decoder 310.

The block splitter 1300 may split a coding block based on a predetermined split type. The detailed split method is as described with reference to FIG. 4, and the detailed description thereof will be omitted here.

The block splitter 1300 may split a coding block by using at least one of a quad split, a binary split, or a ternary split. Here, the quad split may be classified into a square quad split of splitting a square block into four and a non-square quad split of splitting a non-square block into four. In addition, the binary split may include at least one of a symmetric binary split or an asymmetric binary split.

The block splitter 1300 may use predetermined split information for block splitting based on a predetermined split type. Here, the split information may include at least one of a split flag, a quad flag, a binary flag, a split direction flag, a flag indicating whether a non-square quad split is applied, a flag indicating whether an asymmetric binary split is applied, or index information for the asymmetric binary split. The split information may be information signaled by a bitstream, or may be information derived by the decoding apparatus 300.

Meanwhile, when the binary split according to the present disclosure is applied multiple times to a single coding block, there may occur a case in which the coding block is split into the same shape as a non-square quad split. To prevent block split of the same shape from occurring, the block splitter 1300 may restrict the binary split from being allowed when corresponding to a pre-defined condition.

In addition, the block splitter 1300 may perform a tree structure-based block split by using at least one of the split types described above. Alternatively, when a current block is split into four coding blocks by the non-square quad split, the block splitter 1300 may restrict the four coding blocks from being split based on one or more of the split types described above. Alternatively, the block splitter 1300 may use only some of the split types described above for the tree structure-based block split.

The decoding unit 1310 may sequentially decode a plurality of coding blocks generated by the block splitter 1300 in a predetermined coding order.

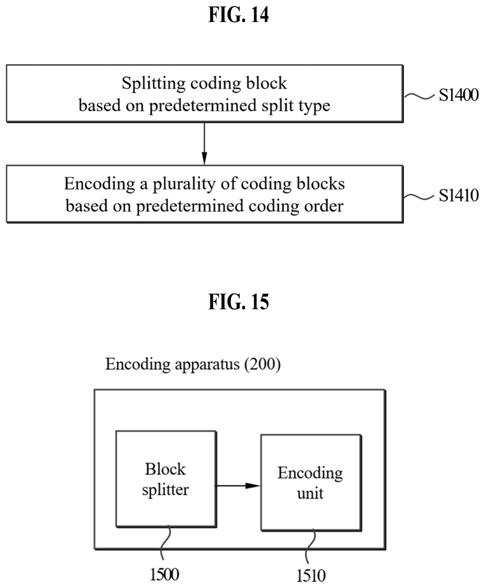

FIG. 14 illustrates an encoding method performed by an encoding apparatus 200, as an embodiment according to the present disclosure.

Referring to FIG. 14, a coding block may be split based on a predetermined split type S1400.

Here, the coding block may mean a coding tree block. Alternatively, it may mean a coding block generated by a block split based on a predetermined split type. The split type according to the present disclosure may include at least one of a quad split, a binary split, or a ternary split.

Additionally, the coding tree block according to the present disclosure may be defined as a square block. However, the present disclosure is not limited thereto, and the coding tree block may also be defined as a non-square block. In addition, a coding block generated by a block split based on a predetermined split type may be either a square block or a non-square block. Depending on the shape of the current block, the number or range of split types allowed/applied to the current block may differ. The split type according to the present disclosure has been described with reference to FIG. 4, and the repeated description will be omitted here.

The quad split according to the present disclosure may be classified into a square quad split for splitting a square block into four and a non-square quad split for splitting a non-square block into four. When the width and height of the current block are different from each other, whether the non-square quad split is allowed/applied to the current block may be determined. As an example, when the ratio of the width and the height of the current block is 1:N or N:1, the non-square quad split may be determined to be allowed/applied. Here, N may be an integer of 2, 3, 4, 5, 6, or more.

Whether the non-square quad split is allowed and/or applied may be determined based on an encoding parameter of the current block. The encoding parameter of the current block may include at least one of size, shape, position, tree type, or component type.

As an example, when the size of the current block is greater than or equal to a predetermined threshold size, the non-square quad split may be determined to be allowed or applied (condition 1). Conversely, when the size of the current block is less than the predetermined threshold size, the non-square quad split may be determined to be not allowed for the current block. The threshold size may mean a minimum block size at which the non-square quad split is allowed. Information related to the minimum block size at which the non-square quad split is allowed may be signaled in at least one of higher-level syntax elements such as a sequence parameter set (SPS), a picture parameter set (PPS), or a slice header (SH). Alternatively, the minimum block size at which the non-square quad split is allowed may be a predefined value identical for an encoding apparatus and a decoding apparatus, and may be an integer of 8, 16, 32, 64, or more.

As an example, when the width and height of the current block are different from each other, the non-square quad split may be determined to be allowed or applied (condition 2). Conversely, when the width and height of the current block are the same, the non-square quad split may be determined to be not allowed.

As an example, even when the width and height of the current block are different from each other, when the ratio of the width and the height of the current block is 1:M or M:1, the non-square quad split may be determined to be allowed or applied (condition 3). Conversely, when the ratio of the width and the height of the current block does not correspond to 1:M or M:1, the non-square quad split may be determined to be not allowed for the current block.

As an example, when the current block is located within a picture, the non-square quad split may be determined to be allowed or applied (condition 4). Conversely, when the current block is located at a picture boundary, the non-square quad split may be determined to be not allowed or not applied for the current block. Alternatively, condition 4 may be defined such that when the current block is located within a picture or when the boundary of the current block exceeds both the right and bottom boundaries of the picture, the non-square quad split is allowed or applied, and otherwise, the non-square quad split is not allowed. Alternatively, condition 4 may be defined such that when the current block is located within a picture or when the boundary of the current block exceeds only one of the right boundary or the bottom boundary of the picture, the non-square quad split is allowed or applied, and otherwise, the non-square quad split is not allowed. However, the present disclosure is not limited thereto, and even when the right boundary of the current block exceeds the right boundary of the picture and/or the bottom boundary of the current block exceeds the bottom boundary of the picture, the non-square quad split may be determined to be allowed for the current block.

At least one of condition 1 to condition 4 described above may be identically defined for an encoding apparatus and a decoding apparatus. The non-square quad split may be determined to be allowed or applied when the pre-defined conditions identical for an encoding apparatus and a decoding apparatus are satisfied. Alternatively, the non-square quad split may be determined to be allowed or applied when any one of condition 1 to condition 4 described above is satisfied.

When it is determined that the quad split is being applied, a quad flag (split_qt_flag) may be encoded into the bitstream. When the value of split_qt_flag is 1, the value of split_qt_flag is encoded as 1 when the current block is split into four coding blocks, and the value of split_qt_flag may be encoded as 0 when the current block is not split into four coding blocks.

The quad flag may be encoded to indicate whether the square quad split is applied. In addition, without signaling or deriving an additional flag for indicating whether the non-square quad split is applied, the quad flag may be encoded to indicate whether the non-square quad split is applied. Alternatively, separately from the quad flag, an additional flag for indicating whether the non-square quad split is applied may be defined and encoded or derived. Hereinafter, a method for signaling or deriving information related to the quad split will be described in detail.

### Method 1

The quad flag may be signaled only when at least one of the binary split or the ternary split is allowed, and at least one of the square quad split or the non-square quad split is allowed. This has been described with reference to Table 1 to Table 3.

Meanwhile, the quad flag may be signaled through the bitstream only when the value of the split flag is 1. The split flag may be signaled through the bitstream when at least one of the square quad split, the non-square quad split, the binary split, or the ternary split is allowed. This has been described with reference to Table 4.

The quad flag for the current block may be entropy encoded based on a predetermined context model. Here, the context model may be derived based on at least one of the split depth of a neighboring block adjacent to the current block or the split depth according to the non-square quad split of the current block. The split depth of the neighboring block may mean the split depth according to the quad split. Alternatively, depending on whether allowSplitQT and allowSplitNQT are true, the split depth of the neighboring block for deriving the context model of the quad flag may be defined differently. A method for calculating the split depth has been described with reference to FIG. 10 to FIG. 12.

### Method 2

The quad flag may be signaled only when at least one of the binary split or the ternary split is allowed, and the quad split is allowed. This has been described with reference to Table 5 to Table 7.

Meanwhile, the quad flag may be signaled through the bitstream only when the value of the split flag is 1. The split flag may be signaled through the bitstream when at least one of the quad split, the binary split, or the ternary split is allowed. This has been described with reference to Table 8.

The quad flag for the current block may be entropy encoded based on a predetermined context model. Here, the context model may be derived based on at least one of the split depth of a neighboring block adjacent to the current block or the split depth according to the non-square quad split of the current block. The split depth of the neighboring block may mean the split depth according to the quad split. A method for calculating the split depth has been described with reference to FIG. 10 to FIG. 12.

### Method 3

The quad flag (split_qt_flag) described above may be restricted to a flag for indicating the quad split of a square coding block, and a flag (split_nqt_flag) for indicating a quad split of a non-square coding block may be additionally defined. In this case, split_qt_flag is referred to as a first quad flag, and split_nqt_flag is referred to as a second quad flag, respectively. In other words, the second quad flag may indicate whether a non-square coding block is split into four non-square coding blocks.

The second quad flag may be signaled when allowSplitNQT is true, and may not be signaled when allowSplitNQT is false. Here, allowSplitNQT may be set to false when any one of the conditions of Table 3 described above is satisfied, and may be set to true otherwise.

Even when allowSplitNQT is true, the second quad flag may be signaled when the width and height of the current block are different, and may not be signaled when the width and height of the current block are identical.

When it is determined that the current block corresponds to a leaf node of a tree structure (or, when the value of a split flag indicating whether the current block is split into a plurality of coding blocks is 0), the second quad flag may be signaled.

When it is determined that the non-square quad split is applied to the current block, the value of the second quad flag for the current block is generated as 1, and when it is determined that the non-square quad split is not applied to the current block, the value of the second quad flag for the current block may be generated as 0.

Meanwhile, the four non-square coding blocks generated by the non-square quad split may be restricted from being further split based on the split type described above. In other words, split information for the non-square coding blocks generated by the non-square quad split may not be generated.

The second quad flag for the current block may be entropy encoded based on a predetermined context model. Here, the context model may be derived based on at least one of the split depth of a neighboring block adjacent to the current block or the split depth according to the non-square quad split of the current block. The neighboring block here may be the same as the neighboring block for deriving the context model of the first quad flag. Alternatively, the position of the neighboring block for deriving the context model of the second quad flag may be differently defined from the position of the neighboring block for deriving the context model of the first quad flag. The split depth of the neighboring block may mean the split depth according to the quad split. A method for calculating the split depth has been described with reference to FIG. 10 to FIG. 12.

Whether the quad flag for the current block is encoded may be determined based on whether the current block overlaps a picture boundary and/or on at least one of the positions of the picture boundary overlapped by the current block (for example, a right boundary, a bottom boundary). As an example, when the right boundary of the current block exceeds the right boundary of the picture and simultaneously the bottom boundary of the current block exceeds the bottom boundary of the picture, it may be determined that the non-square quad split is implicitly applied to the current block. In other words, when the right boundary of the current block exceeds the right boundary of the picture and simultaneously the bottom boundary of the current block exceeds the bottom boundary of the picture, the non-square quad split may be applied to the current block without encoding the quad flag for the current block. In this case, by deriving the value of the quad flag for the current block as 1, the non-square quad split may be forced for the current block. Meanwhile, when the right boundary of the current block exceeds the right boundary of the picture or the bottom boundary of the current block exceeds the bottom boundary of the picture, it may be determined that the non-square quad split is allowed for the current block, and the quad flag may be encoded for the current block.

The binary split according to the present disclosure may mean a split type of splitting the current block into two coding blocks, and the ternary split may mean a split type of splitting the current block into three coding blocks.

When it is determined that the binary split or the ternary split is applied, a binary flag (split_binary_flag) may be encoded into the bitstream. When the coding block is split into two coding blocks, the value of the binary flag may be encoded as 1, and when the coding block is split into three coding blocks, the value of the binary flag may be encoded as 0. A split direction flag indicating the split direction of the binary split or the ternary split may be further encoded. The split direction flag may be encoded before the binary flag is encoded, or may be encoded after the binary flag is encoded. The binary flag may be encoded when at least one of the first quad flag (split_qt_flag) or the second quad flag (split_nqt_flag) described above is 0.

In addition, when the asymmetric binary split is allowed/applied, index information specifying a position of a split line for the asymmetric binary split may be further encoded. The index information may specify any one of candidate positions pre-defined identically for an encoding apparatus and a decoding apparatus. In this case, the pre-defined candidate positions may include the position of a split line for the symmetric binary split. Alternatively, the index information may be encoded only when it is determined that the asymmetric binary split is being applied to the current block, even when it is determined that the binary split is being applied to the current block. In this case, the pre-defined candidate positions may include positions of split lines for the asymmetric binary split without including the position of a split line for the symmetric binary split.

Meanwhile, when the binary split according to the present disclosure is applied multiple times to a single coding block, there may occur a case in which the coding block is split into the same shape as a non-square quad split. To prevent block split of the same shape from occurring, the binary split may be restricted from being allowed when corresponding to a pre-defined condition, as has been described with reference to FIG. 7 and FIG. 8.

The split type described above may be used for tree structure-based block split, as has been described with reference to FIG. 9.

Alternatively, when the current block is split into four coding blocks by the non-square quad split, the four coding blocks may be restricted from being further split based on the split type described above. In this case, the four coding blocks split from the current block may be forced to correspond to leaf nodes of the tree structure, and since signaling of additional syntax for block split may be omitted, the encoding efficiency may be improved.

Alternatively, some of the split types described above may be used for tree structure-based block split, and the others may not be used for tree structure-based block split.

Referring to FIG. 14, a plurality of coding blocks generated by splitting a coding block may be sequentially encoded according to a predetermined coding order S1410.

FIG. 15 illustrates a schematic configuration of an encoding apparatus 200 for performing an encoding method according to the present disclosure.

Referring to FIG. 15, the encoding apparatus 200 may include a block splitter 1500 and an encoding unit 1510. The block splitter 1500 may be included in an image partitioner 210, or may be included in the encoding apparatus 200 as a separate module.

The block splitter 1500 may split a coding block based on a predetermined split type. The specific split method has been described with reference to FIG. 14, and a detailed description thereof will be omitted here.

The block splitter 1500 may split a coding block by using at least one of a quad split, a binary split, or a ternary split. Here, the quad split may be classified into a square quad split of splitting a square block into four and a non-square quad split of splitting a non-square block into four. Additionally, the binary split may include at least one of a symmetric binary split or an asymmetric binary split.

The block splitter 1500 may generate predetermined split information for block split based on a predetermined split type. Here, the split information may include at least one of a split flag, a quad flag, a binary flag, a split direction flag, a flag indicating whether a non-square quad split is applied, a flag indicating whether an asymmetric binary split is applied, or index information for the asymmetric binary split. The split information may be encoded by the entropy encoder 240 and may be signaled through a bitstream.

Meanwhile, when the binary split according to the present disclosure is applied multiple times to a single coding block, there may occur a case in which the coding block is split into the same shape as a non-square quad split. To prevent block split of the same shape from occurring, the block splitter 1500 may restrict the binary split from being allowed when corresponding to a pre-defined condition.

In addition, the block splitter 1500 may perform tree structure-based block split by using at least one of the split types described above. Alternatively, when the current block is split into four coding blocks by the non-square quad split, the block splitter 1500 may restrict the four coding blocks from being split based on one or more of the split types described above. Alternatively, the block splitter 1500 may use only some of the split types described above for tree structure-based block split.

The encoding unit 1510 may sequentially encode a plurality of coding blocks generated by the block splitter 1500 according to a predetermined coding order.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an augmented reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

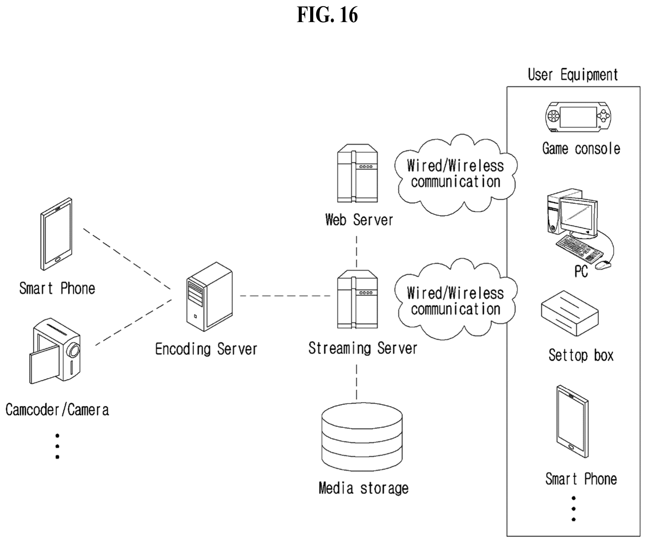

FIG. 16 shows an example of a contents streaming system to which embodiments of the present disclosure may be applied.

Referring to FIG. 16 a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1. An image decoding method, comprising:
splitting a current block based on a predetermined split type; and
decoding a plurality of coding blocks generated by splitting the current block,
wherein the predetermined split type includes at least one of a quad split, a binary split, or a ternary split, and
wherein the quad split is classified into a square quad split of splitting a square block into four and a non-square quad split of splitting a non-square block into four.

2. The image decoding method of claim 1, wherein whether the non-square quad split is allowed is determined based on an encoding parameter of the current block, and
wherein the encoding parameter of the current block includes at least one of a size, a shape of the current block, or a location of the current block within a current picture.

3. The image decoding method of claim 2, wherein whether the non-square quad split is allowed is determined based on whether the size of the current block is greater than or equal to a predetermined threshold size.

4. The image decoding method of claim 2, wherein whether the non-square quad split is allowed is determined based on at least one of whether a width and a height of the current block are different from each other or whether a ratio of the width and the height of the current block is 1:M or M:1, and
wherein M is an integer of 2, 3, 4, or more.

5. The image decoding method of claim 1, wherein the non-square quad split is adaptively performed based on a first quad flag for indicating whether the square quad split is applied.

6. The image decoding method of claim 5, wherein the first quad flag is signaled based on at least one of a first variable indicating whether the square quad split is allowed or a second variable indicating whether the non-square quad split is allowed.

7. The image decoding method of claim 6, wherein when the current block is a block generated by the binary split or the ternary split, the first variable is set to False, and the second variable is set to True.

8. The image decoding method of claim 6, wherein when the current block is a block generated by the binary split or the ternary split,
the first variable is set to False based on a width and a height of the current block being equal to each other, and
the first variable is set to True based on the width and the height of the current block being different from each other.

9. The image decoding method of claim 5, wherein a context model for entropy decoding of the first quad flag is derived based on a split depth of a neighboring block adjacent to the current block, and
wherein the split depth of the neighboring block includes at least one of a split depth according to the square quad split or a split depth according to the non-square quad split.

10. The image decoding method of claim 1, wherein the non-square quad split is adaptively performed based on a second quad flag for indicating whether the non-square quad split is applied.

11. The image decoding method of claim 10, wherein the second quad flag is signaled when the current block corresponds to a leaf node of a tree structure.

12. The image decoding method of claim 1, wherein when the current block is split into two coding blocks by a horizontal binary split, and a vertical binary split is applied to an upper coding block among the two coding blocks, application of a vertical binary split to a lower coding block among the two coding blocks is restricted.

13. The image decoding method of claim 12, wherein when the current block is split into two coding blocks by a vertical binary split, and a horizontal binary split is applied to a left coding block among the two coding blocks, a horizontal binary split is allowed to a right coding block among the two coding blocks.

14. An image encoding method, comprising:
splitting a current block based on a predetermined split type; and
encoding a plurality of coding blocks generated by splitting the current block,
wherein the predetermined split type includes at least one of a quad split, a binary split, or a ternary split, and
wherein the quad split is classified into a square quad split of splitting a square block into four, and a non-square quad split of splitting a non-square block into four.

15. A transmission method, comprising:
obtaining a bitstream for the image, wherein the bitstream is generated by splitting a current block based on a predetermined split type, and encoding a plurality of coding blocks generated by splitting the current block; and
transmitting image information including the bitstream,
wherein the predetermined split type includes at least one of a quad split, a binary split, or a ternary split, and
wherein the quad split is classified into a square quad split of splitting a square block into four, and a non-square quad split of splitting a non-square block into four.
